(19) Europäisches Patentamt
European Patent Office
Office européen des brevets

(11) **EP 4 700 855 A1**

(12) **EUROPEAN PATENT APPLICATION**

(43) Date of publication:
**25.02.2026 Bulletin 2026/09**

(21) Application number: **25196732.9**

(22) Date of filing: **19.08.2025**

(51) International Patent Classification (IPC):
**H01M 4/1391** $^{(2010.01)}$  **H01M 4/36** $^{(2006.01)}$
**H01M 4/48** $^{(2010.01)}$  **H01M 4/62** $^{(2006.01)}$
**H01M 10/0525** $^{(2010.01)}$  **H01M 4/02** $^{(2006.01)}$

(52) Cooperative Patent Classification (CPC):
**H01M 4/624; H01M 4/1391; H01M 4/366;**
**H01M 4/48; H01M 10/0525;** H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.08.2024 KR 20240110464**

(71) Applicant: **SK On Co., Ltd.**
**Seoul 03161 (KR)**

(72) Inventors:
• **LEE, Seok Hee**
**34124 Daejeon (KR)**
• **AN, Woo Hyun**
**34124 Daejeon (KR)**

(74) Representative: **Stolmár & Partner**
**Patentanwälte PartG mbB**
**Blumenstraße 17**
**80331 München (DE)**

(54) **ELECTRODE FOR LITHIUM SECONDARY BATTERY AND METHOD FOR MANUFACTURING THE SAME**

(57) According to embodiments of the present disclosure, an electrode for a lithium secondary battery comprises an electrode active material layer comprising anelectrode active material, a solid electrolyte and a fibrous conductive material. The electrode active material comprises a core particle, and a coating that covers at least a portion of a surface of the core particle and comprises conductive particles. The ratio of the content of the conductive particles to the content of the fibrous conductive material is 0.01 to 2.0 based on the total weight of the electrode active material layer. According to embodiments of the present disclosure, a lithium secondary battery comprising the above-described electrode for a lithium secondary battery may be provided.

FIG 1

EP 4 700 855 A1

## Description

### TECHNICAL FIELD

The present disclosure relates to an electrode for a lithium secondary battery and a method for manufacturing the same.

### BACKGROUND

Secondary batteries are batteries that can be repeatedly charged and discharged. With the rapid progress of information and communication technology, and display industries, secondary batteries have been widely applied as power sources for various portable electronic communication devices, such as camcorders, mobile phones, laptop computers and the like. In addition, battery packs including the secondary batteries have recently been developed and applied as power sources for eco-friendly vehicles, such as hybrid cars and the like.

Examples of secondary batteries include lithium secondary batteries, nickel-cadmium batteries, and nickel-hydrogen batteries. Among them, lithium secondary batteries have high operating voltages and high energy densities per unit weight, making them advantageous in terms of charging speed and lightweight design. In this regard, lithium secondary batteries have been actively developed and applied to various industrial fields

The lithium secondary battery may include a cathode and an anode. The electrodes, such as the cathode and the anode, may include an electrode active material capable of reversibly intercalating and deintercalating lithium ions, and may generate current through a chemical reaction at the electrodes. The electrode for a lithium secondary battery may comprise a conductive material to increase electronic conductivity, and may comprise a solid electrolyte to increase lithium-ion conductivity. The electrode for a lithium secondary battery may be formed by coating a composition for forming an electrode. For example, the composition for forming an electrode may be prepared by mixing components of the electrode in a solvent, and may have, for example, a slurry form.

Recently, as the application scope of lithium secondary batteries continues to expand, the demand for high capacity and output performance has increased. However, since many different material components can be used to prepare an electrode, the components of the electrode may be distributed unevenly during the manufacturing process of the electrode for a lithium secondary battery, resulting in capacity loss and diminished output characteristics due to decreased or uneven conductivities across the electrodes.

### SUMMARY

An object of the present disclosure is to provide an electrode for a lithium secondary battery having improved ionic and electrical conductivities.

Another object of the present disclosure is to provide a method for manufacturing an electrode for a lithium secondary battery having improved ionic and electrical conductivities.

According to exemplary embodiments of the present disclosure, an electrode for a lithium secondary battery includes an electrode active material layer including an electrode active material, a solid electrolyte and a fibrous conductive material. The electrode active material includes a core particle, and a coating that covers at least a portion of a surface of the core particle and comprises conductive particles. A ratio of the content of the conductive particles to the content of the fibrous conductive material in the electrode active material layer is 0.01 to 2.0 based on the total weight of the electrode active material layer.

In some embodiments, the conductive particles may comprise a dot-shaped conductive material.

In some embodiments, the content of the fibrous conductive material may be 0.5% by weight to 2.5% by weight based on the total weight of the electrode active material layer.

In some embodiments, the content of the coating of the electroactive material may be 0.1 parts by weight to 3 parts by weight based on 100 parts by weight of the core particles.

In some embodiments, the fibrous conductive material may have a specific surface area of 0.1 $m^2/g$ to 3,000 $m^2/g$.

In some embodiments, the fibrous conductive material may have a diameter of 0.4 nm to 400 nm.

In some embodiments, the ratio of the content of the conductive particles to the content of the fibrous conductive material may be 0.1 to 1.0.

In some embodiments, the coating may partially cover the surface of the core particle.

In some embodiments, the coating may comprise a third pattern having a web-like shape.

In some embodiments, the coating may further comprise a pattern having an island-like shape or a pattern having a chain-like shape.

In some embodiments, the core particle may have a median particle diameter ($D_{50}$) of 1 $\mu$m to 20 $\mu$m.

In some embodiments, the electrode active material layer may further comprise a binder.

In a method for manufacturing an electrode for a lithium secondary battery according to exemplary embodiments of the present disclosure, a coating including conductive particles may be formed on a core particle to prepare an electrode active material. The electrode active material may be mixed with a solid electrolyte. The mixture of the electrode active material and the solid electrolyte may be mixed with a secondary fibrous conductive material to form an electrode slurry. The electrode slurry may be coated on an electrode current collector to form an active material layer. A ratio of the content of the conductive particles to the content of the fibrous conductive material may be 0.01 to 2.0 based on the total weight of the electrode slurry.

In some embodiments, the conductive particles may comprise a dot-shaped conductive material.

In some embodiments, the coating may be partially formed on the core particle.

In some embodiments, the coating may comprise a web-like pattern formed by conductive particles continuously connected to one another.

In some embodiments, in the step of mixing the electrode active material with a solid electrolyte, the solid electrolyte may become entangled in the web-like pattern of the coating and may come into contact with the surface of the core particle.

In some embodiments, the method may further comprise adding a binder to the electrode slurry.

According to the embodiments of the present disclosure, the electrode for a lithium secondary battery may include an electrode active material, a solid electrolyte, and a secondary fibrous conductive material. Accordingly, the migration of lithium ions and electrons may be promoted within the electrode for a lithium secondary battery.

The electrode active material may comprise a core particle and a coating that covers the core particle. The coating may comprise conductive particles. The secondary fibrous conductive material and the conductive particles may have a content ratio within a predetermined range. The electrode active material and the solid electrolyte may be uniformly dispersed within the electrode for a lithium secondary battery, and a uniform electron-conductive network may be formed within the electrode, while reducing the interfacial resistance of the electrode active material.

The coating may partially cover the core particle and may have a chain-like shape or a web-like shape. The contact between the electrode active material and the solid electrolyte may be increased, thereby further improving ionic conductivity and electronic conductivity. The output characteristics and energy density of the lithium secondary battery may be enhanced.

The lithium secondary battery according to the embodiments of the present disclosure can be widely applied in green technology fields, such as electric vehicles, battery charging stations, as well as solar power generation, wind power generation, and the like, which use the batteries. In addition, the lithium secondary battery according to the embodiments of the present disclosure can be used in eco-friendly electric vehicles, hybrid vehicles, and the like, which are aimed at mitigating climate change by reducing air pollution and greenhouse gas emissions.

## BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a schematic view illustrating an electrode active material according to exemplary embodiments;
FIG. 2 is a schematic flowchart for describing processes of a method for manufacturing an electrode for a lithium secondary battery according to exemplary embodiments;
FIGS. 3 and 4 are schematic plan and cross-sectional views, respectively, illustrating a lithium secondary battery according to exemplary embodiments;
FIG. 5 is a scanning electron microscope (SEM) image of a cathode active material layer prepared in Example 1; and
FIG. 6 is a scanning electron microscope (SEM) image of a cathode active material layer prepared in Comparative Example 1.

## DETAILED DESCRIPTION OF THE INVENTION

According to embodiments of the present disclosure, an electrode for a lithium secondary battery comprising an electrode active material and a secondary electroactive material layer is provided.
In addition, a method for manufacturing the above-described electrode for a lithium secondary battery is also provided.

Unless otherwise defined herein, the terms "upper portion," "lower portion," "upper surface," "lower surface," "bottom surface," etc. as used herein indicate relative positional relationships among the respective components and do not imply an absolute vertical orientation.

Unless otherwise defined herein, when a portion such as a layer, film, thin-film, region, or plate, etc. is present "on" or "above" another portion, it may include not only the case where the portion is present "directly on" the other portion, but also the case where another portion is present between them.

Hereinafter, the embodiments of the present disclosure will be described in detail. However, the embodiments are merely illustrative, and the present disclosure is not limited to the specific embodiments described by way of example.

In some embodiments, an electrode for a lithium secondary battery (hereinafter, "electrode") may comprise an electrode active material comprising a conductive material, an electrode active material layer and a solid electrolyte.

In some embodiments, the electrode active material may comprise a core particle and a coating that covers the surface of the core particle. The core particle may reversibly intercalate and deintercalate lithium ions, and provide electrode activity.

The coating may comprise conductive particles. For example, the conductive particles may be attached to the surface of the core particle to form a coating having conductivity.

A conductive coating may be formed on the surface of the core particle to provide an additional pathway for electron migration. Therefore, for example, electrons may migrate smoothly within the electrode active material layer, and electron migration between the electrode current collector and the electrode active material layer may be promoted. In addition, the interfacial resistance at the surface of the core particle may be reduced, thereby improving the output characteristics of the electrode.

In one embodiment, even if the content of the conductive material within the electrode active material layer is reduced by the coating, a desired level of electronic conductivity may still be achieved. Therefore, the amount of conductive material used may be reduced, and the total contact area between the conductive material and the electrolyte may be reduced, thereby suppressing side reactions.

The conductive material may include a fibrous conductive material. For example, the conductive material may have a fiber shape. The fiber shape may include a cylindrical shape, a hollow shape or the like.

Since the electrode active material layer includes the fibrous conductive material, an electron-conductive network may be widely formed within the electrode. For example, as the fibrous conductive material is three-dimensionally dispersed within the electrode active material layer to form the electron-conductive network, electrons may easily migrate through the fibrous conductive material.

In addition, the fibrous conductive material may be in contact with the coating of the electrode active material to promote the electron transport between electrode active materials, and may prevent a decrease in electronic conductivity due to the addition of the solid electrolyte.

The ratio of the content of the conductive particles to the content of the fibrous conductive material may be 0.01 to 2.0. Within the above range, the interfacial resistance of the electrode active material may be reduced, and the fibrous conductive material may be uniformly dispersed within the electrode active material layer, thereby improving electronic conductivity.

For example, when the ratio of the content of the conductive particles to that of the fibrous conductive material is less than the range, the transport of ions may be hindered by the fibrous conductive material, thereby reducing the energy density. In addition, side reactions between the conductive material and the solid electrolyte may increase, thereby reducing the stability, capacity and output characteristics of the electrode. Further, the electron-conductive network formed by the coated conductive particles may be insufficient, thereby reducing the capacity and output characteristics.

For example, when the ratio of the content of the conductive particles to that of the fibrous conductive material exceeds the above range, the content of the coating may increase relatively, and the contact area between the electrode active material and the solid electrolyte may decrease, thereby lowering the mobility of lithium ions. In addition, the electron-conductive network formed by the fibrous conductive material may be insufficient, thereby lowering the electronic conductivity, and deteriorating the output characteristics of the lithium secondary battery.

In some embodiments, the ratio of the content of the conductive particles to the content of the fibrous conductive material may be 0.01 to 1.8, 0.03 to 1.6, 0.05 to 1.5, 0.08 to 1.4, 0.1 to 1.2, 0.1 to 1.0, 0.15 to 0.8, 0.2 to 0.75, or 0.2 to 0.7.

Within the above range, ionic and electrical conductivity may be further improved, and the initial efficiency, capacity characteristics and output characteristics of the lithium secondary battery may be further improved.

In some embodiments, the fibrous conductive material may refer to a material having an aspect ratio of, for example, 2 or more. The aspect ratio may refer to a ratio of the length to the diameter of the fibrous conductive material.

In one embodiment, the aspect ratio of the fibrous conductive material may be 2 or more, 5 or more, 10 or more, 50 or more, or 100 or more. For example, the aspect ratio of the fibrous conductive material may be 2 to 50,000, 10 to 40,000, 50 to 35,000, or 100 to 30,000. Within the above range, the dispersibility of the fibrous conductive material may be further improved, and the electrical conductivity of the electrode may be further enhanced by the extensively formed electron-conductive network.

In some embodiments, the fibrous conductive material may include carbon nanotubes (CNTs), carbon nanofibers (CNFs), metal fibers, vapor-grown carbon fibers (VGCFs), or the like. The metal fiber may include a metal such as copper (Cu), nickel (Ni), aluminum (Al), iron (Fe), silver (Ag), gold (Au), platinum (Pt), zinc (Zn), titanium (Ti), or an alloy thereof.

In one embodiment, the fibrous conductive material may include carbon nanotubes (CNTs). For example, the fibrous conductive material may include single-walled carbon nanotubes (SWCNTs), double-walled carbon nanotubes (DWCNTs), multi-walled carbon nanotubes (MWCNTs), rope-shaped carbon nanotubes (rope CNTs), or the like.

Carbon nanotubes have high crystallinity and mechanical stability, and thus the electrical conductivity, the cycle life characteristics, and the output characteristics of the lithium secondary battery may be further improved.

In some embodiments, the fibrous conductive material may have a specific surface area of 0.1 $m^2$/g to 3,000 $m^2$/g. The specific surface area may be measured by the Brunauer-Emmett-Teller (BET) method.

In some embodiments, the fibrous conductive material may have a specific surface area of 0.3 $m^2$/g to 2,500 $m^2$/g, 0.5 $m^2$/g to 2,000 $m^2$/g, 0.7 $m^2$/g to 1,500 $m^2$/g, 0.8 $m^2$/g to 1,000 $m^2$/g, 0.9 $m^2$/g to 500 $m^2$/g, or 1 $m^2$/g to 300 $m^2$/g.

Within the above range, electron migration may be further promoted, and agglomeration caused by an excessively high specific surface area may be suppressed, thereby further improving the dispersibility of the fibrous conductive material.

In some embodiments, the fibrous conductive material may have a diameter of 0.4 nm to 400 nm. The diameter of the fibrous conductive material refers to the width in the minor axis direction. Within the above range, the dispersibility of the fibrous conductive material may be further improved, and the contact between the electrode active material and the fibrous conductive material may be increased.

In one embodiment, the fibrous conductive material may have a diameter of 1 nm to 350 nm, 2 nm to 300 nm, 4 nm to 250 nm, 5 nm to 200 nm, 6 nm to 180 nm, 7 nm to 150 nm, 8 nm to 100 nm, 8.5 nm to 75 nm, or 9 nm to 50 nm.

In some embodiments, the fibrous conductive material may have a length of 5 $\mu$m to 200 $\mu$m, 10 $\mu$m to 180 $\mu$m, 15 $\mu$m to 160 $\mu$m, 20 $\mu$m to 150 $\mu$m, 25 $\mu$m to 130 $\mu$m, or 30 $\mu$m to 120 $\mu$m. The length of the fibrous conductive material refers to the width in the major axis direction. Within the above range, electron migration between the electrode active materials may be smoothly performed, while preventing an increase in the gap between the electrode active materials caused by the fibrous conductive material, thereby improving the energy density.

According to exemplary embodiments, the conductive particles in the electroactive layer may comprise a dot-shaped conductive material. For example, the dot-shaped conductive material may have a substantially spherical shape.

In some embodiments, the dot-shaped conductive material may refer to a conductive material having an aspect ratio of 1.5 or less. For example, the aspect ratio of the dot-shaped conductive material may be 0.5 to 1.5.

In the dot-shaped conductive material, the conductive particles may be easily attached to localized regions on the surface of the core particle. Accordingly, contact between the solid electrolyte and core particle may be additionally achieved in regions of the surface of the core particle, promoting ion migration in addition to electron migration.

In exemplary embodiments, the dot-shaped conductive material comprises carbon-based conductive materials such as graphite, carbon black, graphene, and carbon nanotubes; or a metal-based conductive material such as tin, tin oxide, titanium oxide, $LaSrCoO_3$, $LaSrMnO_3$ or the like.

In one embodiment, the dot-shaped conductive material may comprise carbon black. For example, the dot-shaped conductive material may comprise acetylene black, furnace black, ketjen black, channel black or the like.

Carbon black has high electronic conductivity, chemical stability, and mechanical strength, so that the output characteristics and stability of the lithium secondary battery may be further improved.

In some embodiments, the dot-shaped conductive material may have a median particle diameter ($D_{50}$) of 10 nm to 100 nm, 10 nm to 60 nm, or 20 nm to 50 nm. The median particle diameter ($D_{50}$) may be defined as a particle diameter at a point of 50% of a volume-based particle diameter cumulative distribution. For example, the median particle diameter (D50) may be measured using a laser diffraction method (e.g., Microtrac, MT 3000).

In some embodiments, the content of the fibrous conductive material may be 0.5% by weight ("wt%") to 2.5 wt% based on the total weight of the electrode active material layer.

In some embodiments, the content of the conductive particles may be 0.1 wt% to 1.0 wt% based on the total weight of the electrode active material layer.

When the ratio of the content of the fibrous conductive material to the conductive particles satisfies the above-described range and each content is adjusted within the above-described range, a more uniform and wider electron-conductive network may be formed within the electrode materials. Therefore, the electrical conductivity, capacity characteristics, and rate characteristics may be further enhanced.

In one embodiment, the content of the fibrous conductive material may be 0.7 wt% to 2.3 wt%, 0.8 wt% to 2.2 wt%, 0.8 wt% to 2.0 wt%, 0.9 wt% to 1.9 wt%, or 1.0 wt% to 1.8 wt% based on the total weight of the electrode active material layer.

Within the above range, high ionic conductivity may be achieved while the internal resistance of the electrode active material layer is further reduced. Accordingly, the initial efficiency, rate characteristics, and ionic conductivity of the lithium secondary battery may be further improved.

In one embodiment, the content of the conductive particles may be 0.1 wt% to 0.97 wt%, 0.11 wt% to 0.95 wt%, 0.115 wt% to 0.93 wt%, 0.12 wt% to 0.90 wt%, or 0.125 wt% to 0.85 wt% based on the total weight of the electrode active material layer.

Within the above range, the interfacial resistance of the electrode active material may be reduced, and migration of electrons and ions within the electrode may be further facilitated.

In some embodiments, the content of the coating of the electroactive material may be 0.1 wt% to 3 wt% based on 100 wt% of the core particles. Within the above range, the coating coverage may be appropriately adjusted, and both the electrical conductivity and ionic conductivity of the electrode active material may be improved.

In one embodiment, the content of the coating may be 0.1 parts by weight ("wt parts") to 2.8 wt parts, 0.11 wt parts to 2.5 wt parts, 0.115 wt parts to 2.5 wt parts, 0.12 wt parts to 2.2 wt parts, or 0.12 wt parts to 2.0 wt parts, based on 100 wt parts of the core particles.

In one embodiment, the coating may be substantially composed of the conductive particles. Accordingly, an increase in interfacial resistance due to organic binders or the like may be prevented, and both the electrical and ionic conductivity may be further improved.

An additional pathway for lithium ions to migrate within the electrode may be provided by the solid electrolyte, and the capacity and output characteristics of the lithium secondary battery may be improved.

The solid electrolyte may comprise a sulfide-based electrolyte, an oxide-based electrolyte, and/or a polymer electrolyte. The polymer electrolyte may comprise an ionically conductive polymer or a gel polymer electrolyte.

In one embodiment, the sulfide-based electrolyte may be represented by Formula 1 below.

$$[\text{Formula 1}] \qquad Li_e Y_f P_g S_h Z_i$$

In Formula 1, e, f, g, h and i may satisfy $0 < e < 12$, $0 \leq f \leq 6$, $0 \leq g \leq 6$, $0 < h \leq 12$, and $0 \leq i \leq 9$; Y may comprise at least one element of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W; and Z may comprise at least one element of F, Cl, Br and I.

In some embodiments, the sulfide-based electrolyte may be an LPS-based solid electrolyte including Li, P and S, an LGPS-based solid electrolyte including Li, P, Ge and S, or an LSiPSCl-based solid electrolyte including Li, Si, P, S and Cl.

For example, as the sulfide-based electrolyte, $Li_2S\text{-}P_2S_5$, $Li_{10}GeP_2S_{12}$, $Li_{10}SnP_2S_{12}$, $Li_{9.94}Si_{1.74}P_{1.44}S_{11.7}Cl_{0.3}$, $Li_{10}(Si_{0.5}Ge_{0.5})P_2S_{12}$, $Li_{10}(Ge_{0.5}Sn_{0.5})P_2S_{12}$, $Li_{10}(Si_{0.5}Sn_{0.5})P_2S_{12}$, $Li_{10}GeP_2S_{11.7}O_{0.3}$, $Li_{9.6}P_3S_{12}$, $Li_9P_3S_9O_3$, $Li_{10.35}Ge_{1.35}P_{1.65}S_{12}$, $Li_{10.35}Si_{1.35}P_{1.65}S_{12}$, $Li_{9.81}Sn_{0.81}P_{2.19}S_{12}$, $Li_{9.42}Si_{1.02}P_{2.1}S_{9.96}O_{2.04}$, $Li_6PS_5Cl$, and the like may be used.

In some embodiments, the oxide-based electrolyte may comprise an ion-conductive compound containing a metal oxide and/or oxygen.

In some embodiments, the metal oxide may comprise $Al_2O_3$, $ZnO_2$, $Ce_2O_3$, $TiO_2$, $ZrO_2$, $HfO_2$, $MnO_2$, MgO, $WO_2$, $V_2O_5$, and the like.

The ion-conductive compound may comprise garnet compounds such as LLZO compounds; perovskite compounds such as LLTO compounds; NASICON compounds such as $Li_{1+x}Al_xGe_{2-x}(PO_4)_3 (0<x<2)$, $Li_{1+x}Al_xTi_{2-x}(PO_4)_3 (0<x<2)$, $Li_{1+x}Ti_{2-x-y}Al_xSi_y(PO_4)_{3-y} (0 \leq x \leq 1,\ 0 < y \leq 1)$, LAGP compounds, LATP compounds, $LiAl_xZr_{2-x}(PO_4)_3 (0 \leq x \leq 1,\ 0 \leq y \leq 1)$, $LiTi_xZr_{2-x}(PO_4)_3 (0 \leq x \leq 1,\ 0 \leq y \leq 1)$; LIPON compounds; $Li_6La_2CaTa_2O_{12}$; $Li_6La_2ANb_2O_{12}$ (where A is Ca or Sr); $Li_2Nd_3TeSbO_{12}$, $Li_3BO_{2.5}N_{0.5}$; $Li_9SiAlO_8$, and the like.

In one embodiment, the solid electrolyte may comprise a sulfide-based electrolyte. The sulfide-based electrolyte may exhibit high compatibility and stability with the electrode active material, so that the electrochemical characteristics of the lithium secondary battery may be further improved.

In some embodiments, the content of the solid electrolyte may be 5 to 80 wt parts, 10 to 70 wt parts, or 15 to 60 wt parts based on 100 wt parts of the electrode active material. Within the above range, ionic conductivity in the electrode active material layer may be increased while preventing a reduction in energy density caused by the solid electrolyte. Accordingly, both the capacity and output characteristics of the lithium secondary battery may be improved.

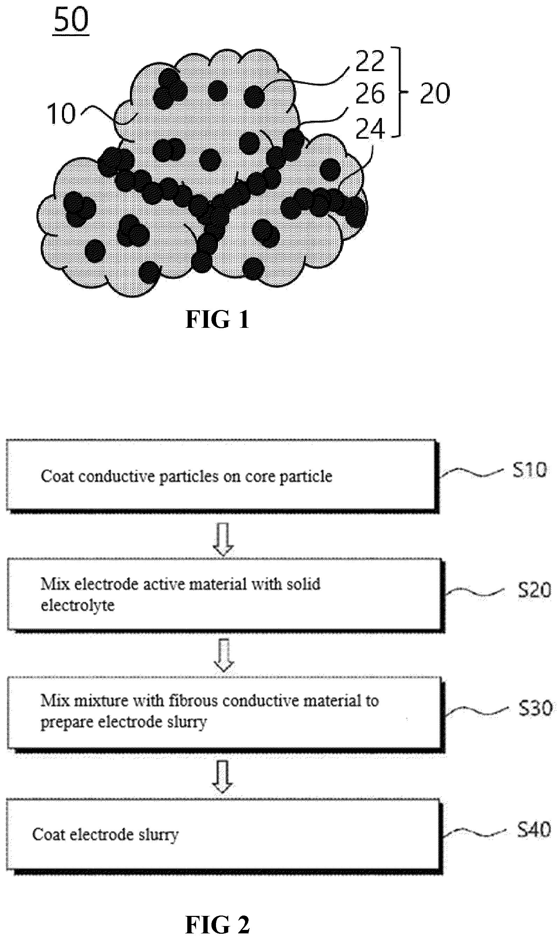

FIG. 1 is a schematic view illustrating an electrode active material according to exemplary embodiments.

Referring to FIG. 1, an electrode active material 50 may include a core particle 10 and a coating 20 that covers the surface of the core particle 10.

The coating 20 may be formed on a partial region of the surface of the core particle 10. For example, the coating 20 may partially cover the surface of the core particle 10.

For example, when the coating entirely covers the surface of the core particle, the contact between the core particle and the electrolyte may decrease, thereby reducing the mobility of lithium ions at the surface of the core particle. Accordingly, the ionic conductivity in the electrode active material layer may be reduced.

According to exemplary embodiments, the coating 20 may be formed only on a partial region of the surface of the core particle 10, thereby ensuring electronic conductivity through the conductive coating while simultaneously improving lithium-ion conductivity.

In one embodiment, the coating 20 may cover 10% or more, 20% or more, or 30% or more of the surface of the core particle 10. In one embodiment, the coating 20 may cover 80% or less, 70% or less, 60% or less, or 50% or less of the surface of the core particle 10.

Within the above range, ionic conductivity may be increased, while the electronic conductivity and stability of the electrode active material 50 may be improved. Accordingly, the output, capacity, and cycle life characteristics of the lithium secondary battery may be further improved.

In some embodiments, the coating 20 may include a first pattern 22 having an island-like shape. The island-like shape may refer to a form in which conductive particles are discretely spaced and distributed, and may have a spherical, hemispherical, cylindrical, oval, or irregular shape.

For example, the first pattern 22 may be formed by each of the conductive particles being individually dispersed on the surface of the core particle 10, or by some of the conductive particles being agglomerated together.

Since the coating 20 includes the first pattern 22, the ionic conductivity on the surface of the core particle 10 may be improved. Therefore, for example, the migration of lithium ions between the electrode active material 50 and the electrolyte may be facilitated, thereby improving the capacity characteristics of the lithium secondary battery.

In some embodiments, the coating 20 may include a second pattern 24 having a chain-like shape. The chain-like shape may refer to a form in which a plurality of conductive particles are connected in an extended chain shape.

For example, the second pattern 24 may be formed by some of the conductive particles being continuously connected. The second pattern 24 may have a straight, curved, bent, zigzag, wave, or arc shape, and may further include a plurality of branches extending from these shapes.

Since the coating includes the second pattern 24, the conductivity of the electrode active material may be improved and the internal resistance of the electrode may be decreased. Accordingly, the rate characteristics of the lithium secondary battery may be improved.

In one embodiment, the second pattern 24 may have a length greater than that of the first pattern 22. For example, the length may be measured as the length of the longest portion of the first pattern 22 or the second pattern 24.

For example, the first pattern 22 may have a length of 0.5 $\mu$m or less, and the second pattern 24 may have a length of 1.0 $\mu$m or more. In one embodiment, the second pattern 24 may have a length of 7.0 $\mu$m or less.

In one embodiment, the coating 20 may comprise both the first pattern 22 and the second pattern 24. Accordingly, the isolation of lithium ions in regions surrounded by the chain-like pattern may be prevented, and the isolation of electrons within the island-like pattern may also be prevented. Therefore, both the ionic and electrical conductivity of the electrode active material 50 may be improved.

In some embodiments, the coating 20 may comprise a third pattern 26 having a web-like shape. The web-like shape may refer to a mesh structure formed by a plurality of chain-like shapes interconnected with one another. For example, at least two second patterns 24 may intersect and be connected to form the third pattern 26.

Since the conductive coating includes the third pattern 26 having a web-like shape, a continuous electron migration pathway through the third pattern 26 may additionally be provided on the surface of the core particle 10. Accordingly, the electrical conductivity of the cathode active material 50 may be further improved, and the output characteristics of the lithium secondary battery may be further enhanced.

In some embodiments, the contact between the core particle 10 and the solid electrolyte may be further improved by the third pattern 26. For example, during the mixing of the electrode active material 50 and the solid electrolyte, the solid electrolyte may become entangled in or trapped by the mesh-like third pattern 26. Accordingly, the solid electrolyte may come into contact with or attach to the surface of the core particle 10, and transport of ions between the electrode active material and the solid electrolyte may be further promoted.

In some embodiments, the core particle 10 may have a median particle diameter ($D_{50}$) of 1 $\mu$m to 20 $\mu$m. Within the above range, side reactions between the core particle and electrolyte may be suppressed, and the migration distance of lithium ions may be shortened, thereby further improving the capacity characteristics and output characteristics of the lithium secondary battery.

In one embodiment, the core particle 10 may have a median particle diameter of 2 $\mu$m to 18 $\mu$m, 3 $\mu$m to 17 $\mu$m, 4 $\mu$m to 15 $\mu$m, or 5 $\mu$m to 12 $\mu$m.

In some embodiments, the electrode active material may be a cathode active material. For example, the electrode for a lithium secondary battery may be provided as a cathode.

In some embodiments, the core particle 10 may comprise lithium metal oxide particles.

In some embodiments, the core particle 10 may comprise one or more compounds selected from lithium iron phosphate compounds, lithium cobalt oxides, lithium manganese oxides, lithium nickel oxides, or lithium composite oxides.

In some embodiments, the core particle 10 may comprise a compound represented by Formula 2 below.

[Formula 2]     $Li_aNi_bM_{1-b}O_2$

In Formula 2, a and b may satisfy $0.95 \leq a \leq 1.08$, and $b \geq 0.5$; and M may comprise at least one element of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In one embodiment, the core particle 10 comprises nickel (Ni) and may further comprise at least one of cobalt (Co) and manganese (Mn). For example, a nickel-cobalt-manganese (NCM)-based lithium oxide may be used as the cathode active material.

In one embodiment, the element M of Formula 2 may comprise nickel (Ni) to increase the capacity of the electrode.

In one embodiment, M comprises cobalt (Co). In one embodiment, M comprises manganese (Mn). Both Co and Mn can be added to increase the capacity of the electrode.

The chemical structure represented by Formula 2 shows a bonding relationship between elements included in the lattice structure or crystal structure of the core particle 10, and does not exclude other additional elements. For example, M may be provided as a main active element of the core particle 10. Here, it should be understood that Formula 2 is provided to express the bonding relationship between the main active elements, and is a formula encompassing the introduction and substitution of the additional elements.

In one embodiment, the core particle 10 may further comprise auxiliary elements which are added to the main active elements, in order to enhance chemical stability thereof or the crystal structure. The auxiliary element may be incorporated into the crystal structure together to form a bond, and it should be understood that this case is also included within the chemical structure represented by Formula 2.

In some embodiments, the electrode active material may be an anode active material. For example, the electrode for a lithium secondary battery may be provided as an anode.

For example, as the core particle 10, carbon-based materials such as crystalline carbon, amorphous carbon, carbon composites, or carbon fibers; a lithium alloy; a silicon- or tin-based material, or the like may be used.

Examples of the amorphous carbon may comprise hard carbon, cokes, mesocarbon microbead (MCMB) calcined at 1500°C or lower, mesophase pitch-based carbon fiber (MPCF) or the like.

Examples of the crystalline carbon may comprise graphite-based carbon such as natural graphite, graphite cokes, graphite MCMB, graphite MPCF or the like.

Other elements included in the lithium alloy may comprise, for example, aluminum, zinc, bismuth, cadmium, antimony, silicon, lead, tin, gallium, indium or the like.

The silicon-based material may comprise, for example, Si, $SiO_x$ (0<x<2), Si/C, SiO/C, Si-Metal or the like.

In some embodiments, the content of the electrode active material may be 60 wt% to 99 wt%, 65 wt% to 97 wt%, 70 wt% to 95 wt%, 70 wt% to 90 wt%, 71 wt% to 88 wt%, or 72 wt% to 85 wt% based on the total weight of the electrode active material layer.

Within the above range, the energy density and capacity characteristics of the lithium secondary battery may be further improved.

According to exemplary embodiments, the electrode active material layer may further comprise a binder.

The binder may comprise polyvinylidene fluoride (PVDF), poly(vinylidene fluoride-co-hexafluoropropylene), polyacrylonitrile, polymethylmethacrylate, acrylonitrile butadiene rubber, polybutadiene rubber, styrene-butadiene rubber (SBR) and the like.

In one embodiment, a PVDF-based binder may be used as a binder for the cathode. In one embodiment, acrylonitrile butadiene rubber, polybutadiene rubber, or styrene-butadiene rubber may be used as a binder for the anode, and a thickener such as carboxymethyl cellulose (CMC) may be further included.

In some embodiments, the content of the binder may be 0.5 wt% to 5 wt%, 1.0 wt% to 4.0 wt%, or 1.0 wt% to 3.0 wt% based on the total weight of the electrode active material layer. Within the above range, the stability, adhesion, and energy density of the electrode active material layer may be further improved, while the internal resistance may be reduced.

FIG. 2 is a flowchart for describing a method for manufacturing an electrode for a lithium secondary battery according to exemplary embodiments. Hereinafter, the method for manufacturing an electrode for a lithium secondary battery will be described with reference to FIG. 2.

Referring to FIG. 2, conductive particles may be coated on a core particle to prepare an electrode active material (for example, step S10).

For example, the core particle and the conductive particles may be mixed. A thermal, physical, or chemical external force may be applied to the mixture of the core particle and the conductive particles to attach the conductive particles to the surface of the core particle.

In some embodiments, the conductive particles may be partially attached to the surface of the core particle. For example, a coating may be formed on a partial region of the surface of the core particle.

In one embodiment, the mixture of the core particle and the conductive particles may be stirred using a resonance mixer. An acoustic mixer may be used as the resonance mixer. For example, the acoustic resonance mixer may be the LabRAM series from Resodyn.

When the core particle and the conductive particles are stirred by the acoustic resonance mixer, strong shear forces and collision forces induced by acoustic energy and vibration energy may act on the particles, so that the conductive particles may be attached to the surface of the core particle.

For example, during the stirring of the mixture by the acoustic resonance mixer, some of the conductive particles may aggregate with one another to form an island-like coating, or some of the conductive particles may interconnect to form a chain-like or web-like coating.

In some embodiments, the mixture may be stirred at a frequency of 58 Hz to 62 Hz. Within the above range, the conductive particles may partially cover the core particle, and a pattern having a web-like shape may be formed on the surface of the core particle.

For example, if the frequency of the acoustic resonance mixer is less than 58 Hz, the conductive particles may entirely cover the surface of the core particle. If the frequency of the acoustic resonance mixer is greater than 62 Hz, the core particle may be broken, and a chain-like or web-like coating may not be formed.

In some embodiments, the mixture may be stirred at an acceleration of greater than 40 G and less than 75 G. Within the above range, the shape, coverage ratio, and thickness of the coating may be appropriately adjusted.

In some embodiments, the stirring time of the mixture may be 1 minute to 50 minutes, 5 minutes to 40 minutes, or 10 minutes to 30 minutes. Within the above range, the conductive particles may be partially attached to the surface of the core particle, so that a coating having a web-like shape may be more easily formed.

In one embodiment, the conductive particles may include a dot-shaped conductive material. By using the dot-shaped conductive material as the conductive particles, a coating having an island-like, chain-like, or web-like shape may be easily formed.

The electrode active material may be mixed with a solid electrolyte (for example, step S20).

For example, the solid electrolyte may be added to the electrode active material and stirred.

In one embodiment, the electrode active material may include a web-like coating, and the solid electrolyte may become entangled in the coating during the mixing of the electrode active material and the solid electrolyte. Accordingly, aggregation between the solid electrolytes may be suppressed, and the dispersibility of the solid electrolyte may be further enhanced.

In one embodiment, the mixing and stirring may be performed under wet conditions. For example, the electrode active material and the solid electrolyte may be mixed and stirred in a solvent.

The mixture of the electrode active material and the solid electrolyte may be mixed with a fibrous conductive material to prepare an electrode slurry (for example, step S30).

The fibrous conductive material may be added to the mixture so that the ratio of the content of the conductive particles to the content of the fibrous conductive material is 0.01 to 2.0 based on the total weight of the electrode slurry.

In one embodiment, the fibrous conductive material may be added to the mixture in the above-described content and stirred so as to be uniformly dispersed in the mixture. By first mixing the core particle having the coating formed thereon with the solid electrolyte, and then mixing the fibrous conductive material, the dispersibility of the electrode active material, the solid electrolyte and the fibrous conductive material may be improved.

For example, since the solid electrolyte is entangled in the coating and fixed to the surface of the electrode active material, the electrode active material and the solid electrolyte may be uniformly dispersed in the mixture even after being additionally mixed with the fibrous conductive material.

In addition, since the amount of the fibrous conductive material may be reduced due to the conductive coating, aggregation between the fibrous conductive materials may be suppressed. Accordingly, a uniform electron-conductive network may be formed in the electrode active material layer, and a sufficient ion transport pathway may be provided by the solid electrolyte.

In some embodiments, a binder may additionally be added to the electrode slurry. For example, a binder solution may be added to the mixture of the electrode active material, the solid electrolyte and the fibrous conductive material and stirred.

In one embodiment, the electrode slurry may further include a dispersant. For example, the dispersant may be added together with the binder solution.

The electrode slurry may be coated on an electrode current collector to form a electrode active material layer (for example, step S40).

For example, the electrode slurry may be coated on at least one surface of the electrode current collector, and then dried and roll-pressed to manufacture an electrode for a lithium secondary battery.

The lithium secondary battery according to embodiments of the present disclosure may include the above-described electrode for a lithium secondary battery. The lithium secondary battery may include the electrode for a lithium secondary battery and a counter electrode disposed to face the electrode for a lithium secondary battery.

In some embodiments, the electrode for a lithium secondary battery may be provided as a cathode. In some embodiments, the electrode for a lithium secondary battery may be provided as an anode. In some embodiments, both the cathode and the anode may include the electrode for a lithium secondary battery.

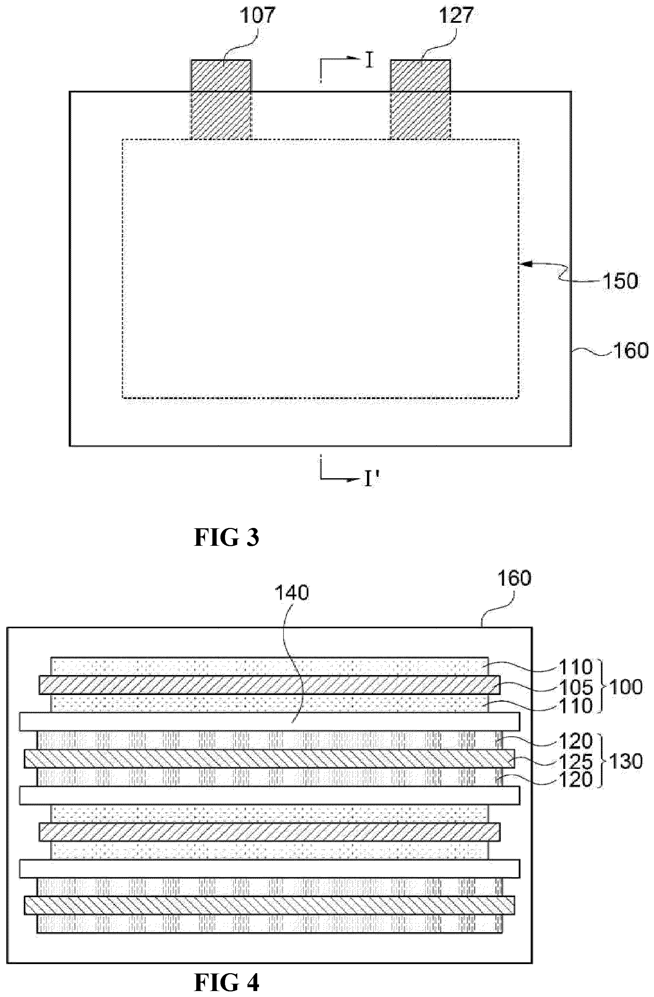

FIGS. 3 and 4 are schematic plan and cross-sectional views, respectively, of a lithium secondary battery according to exemplary embodiments.

Referring to FIGS. 3 and 4, the lithium secondary battery may include a cathode 100 and an anode 130 disposed to face the cathode 100 and figure 4 is a cross-sectional view taken along the I-I' line in Figure 3.

The cathode 100 may include a cathode current collector 105 and a cathode active material layer 110 formed on at least one surface of the cathode current collector 105. In one embodiment, the cathode active material layer 110 may be formed on both surfaces (e.g., the upper and lower surfaces) of the cathode current collector 105.

The cathode active material layer 110 may comprise the above-described cathode active material, solid electrolyte, conductive material and/or binder.

The cathode current collector 105 may comprise stainless steel, nickel, aluminum, titanium, or an alloy thereof. The cathode current collector 105 may also comprise aluminum or stainless steel whose surface has been treated with carbon, nickel, titanium or silver.

The anode 130 may comprise an anode current collector 125 and an anode active material layer 120 formed on at least one surface of the anode current collector 125. In one embodiment, the anode active material layer 120 may be formed on both surfaces (e.g., the upper and lower surfaces) of the anode current collector 125.

The anode active material layer 120 may comprise the above-described anode active material, solid electrolyte, conductive material, binder, and/or dispersant.

The anode current collector 125 may comprise gold, stainless steel, nickel, aluminum, titanium, copper, or an alloy thereof. For example, the anode current collector 125 may comprise copper or a copper alloy.

In some embodiments, a separation membrane 140 may be interposed between the cathode 100 and the anode 130. The separation membrane 140 may comprise a porous polymer film made of a polyolefin polymer such as ethylene homopolymer, propylene homopolymer, ethylene/butene copolymer, ethylene/hexene copolymer, ethylene/methacrylate copolymer. The separation membrane may comprise a nonwoven fabric made of glass fibers having a high melting point, polyethylene terephthalate fibers, etc.

According to exemplary embodiments, the cathode 100, the anode 130, and the separation membrane 140 may be repeatedly disposed to form an electrode assembly 150. In some embodiments, the electrode assembly 150 may be of a winding type, a stacking type, a z-folding type, or a stack-folding type.

The electrode assembly 150 may be accommodated in a case 160 to define a lithium secondary battery.

According to exemplary embodiments, the electrode assembly 150 may be accommodated in the case 160 together with an electrolyte. A non-aqueous electrolyte may be used as the electrolyte.

The non-aqueous electrolyte may comprise a lithium salt of an electrolyte and an organic solvent. The lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the like may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, gamma-butyrolactone, propylene sulfite and tetrahydrofuran, and the like. may be used. These may be used alone or in combination of two or more thereof.

In some embodiments, a solid electrolyte layer may be interposed between the cathode 100 and the anode 130. The solid electrolyte layer may comprise a sulfide-based electrolyte, an oxide-based electrolyte, or a polymer electrolyte.

In this case, the lithium secondary battery may exclude a separation membrane and an electrolyte. The solid electrolyte layer substantially serve as a separation membrane and may prevent a short circuit between the cathode and the anode. In addition, lithium ions may migrate between the cathode and the anode through the solid electrolyte layer.

As shown in FIG. 3, electrode tabs (cathode tabs and anode tabs) may protrude from the cathode current collector 105 and the anode current collector 125, respectively, which belong to each electrode cell, and may extend to one side of the case 160. The electrode tabs may be fused together with the one side of the outer case 160 to form electrode leads (a cathode lead 107 and an anode lead 127) that extend or are exposed to the outside of the outer case 160.

The lithium secondary battery may be manufactured in a cylindrical shape using a can, a prismatic shape, a pouch shape, a coin shape, etc., for example.

# EXAMPLES

**Preparation Example 1: Preparation of cathode active material**

100 wt parts of $LiNi_{0.6}Co_{0.2}Mn_{0.2}O_2$ ($D_{50}$: 10 $\mu$m) as a core particle and 0.6 wt parts of acetylene black ($D_{50}$: 25 nm to 30 nm) as conductive particles were added to an acoustic resonance mixer (LabRAMII, Resodyn). The frequency of the acoustic resonance mixer was set to 60 Hz, and the acceleration was set to 60 G. Stirring was then performed for 20 minutes. Thereafter, a cathode active material was obtained from the acoustic resonance mixer.

**Fabrication of cathode**

75 wt parts of the cathode active material, 21.5 wt parts of $Li_6PS_5Cl$ as a solid electrolyte, 1.5 wt parts of carbon nanotubes (specific surface area: 175 $m^2/g$, diameter: 10 nm to 15 nm) as a fibrous conductive material, and 2 wt parts of polyvinylidene fluoride (PVDF) as a binder were mixed to prepare a cathode slurry.

The cathode slurry was uniformly applied to an aluminum foil having a thickness of 15 $\mu$m, and then vacuum-dried and roll-pressed to form a cathode active material layer having a density of 3.2 g/cc, thereby fabricating a cathode.

**(3) Manufacture of lithium secondary battery**

An anode slurry was prepared by mixing artificial graphite as an anode active material, carbon nanotubes (CNT) as a conductive material, and styrene butadiene rubber (SBR) as a binder in a weight ratio of 92:5:3. The anode slurry was applied to a copper foil having a thickness of 15 $\mu$m, and then dried and roll-pressed to fabricate an anode.

A slurry was prepared by mixing $Li_6PS_5Cl$ as a solid electrolyte and SBR as a binder in a weight ratio of 97:3, and then the slurry was applied to a release film, and dried and the roll-pressed to prepare a solid electrolyte sheet.

The solid electrolyte sheet was cut into a size of 3 cm $\times$ 4 cm, and the cathode and the anode were stacked on both surfaces of the solid electrolyte sheet to form an electrode assembly. Thereafter, the tab portions of the cathode and the anode were each welded, and the electrode assembly including the welded cathode/solid electrolyte sheet/anode was placed in a pouch and vacuum-sealed to manufacture a lithium secondary battery.

**Examples 2 to 21**

Lithium secondary batteries were manufactured in the same manner as in Example 1, except that the input amounts of acetylene black and carbon nanotubes were changed as shown in Table 1 below, and the content of the solid electrolyte was adjusted such that the total weight of the cathode slurry was 100 wt parts.

**Example 22**

A lithium secondary battery was manufactured in the same manner as in Example 1, except that, during the preparation of the cathode active material, carbon nanotubes (diameter: 12.5 nm, specific surface area: 175 $m^2/g$) were used as the conductive particles instead of acetylene black.

**Comparative Example 1**

A lithium secondary battery was manufactured in the same manner as in Example 1, except that the core particle was used as the cathode active material without forming a conductive coating.

**Comparative Example 2**

A lithium secondary battery was manufactured in the same manner as in Example 8, except that the core particle was used as the cathode active material without forming a conductive coating.

**Comparative Example 3**

A lithium secondary battery was manufactured in the same manner as in Example 14, except that the core particle was used as the cathode active material without forming a conductive coating.

**Comparative Examples 4 to 6**

Lithium secondary batteries were manufactured in the same manner as in Example 1, except that the amounts of acetylene black and carbon nanotubes were changed as shown in Table 1 below, and the content of the solid electrolyte was adjusted such that the total weight of the cathode slurry was 100 wt parts.

**Comparative Example 7**

A lithium secondary battery was manufactured in the same manner as in Example 1, except that, during the preparation of the cathode active material, acetylene black ($D_{50}$ diameter: 25 nm to 30 nm) was used as the conductive material instead of carbon nanotubes.

**Comparative Example 8**

A lithium secondary battery was manufactured in the same manner as Comparative Example 7, except that, during the preparation of the cathode active material, carbon nanotubes (diameter: 12.5 nm, specific surface area: 175 $m^2/g$) were used as the conductive particles instead of acetylene black.

[TABLE 1]

| | Conductive particle content (A) (wt parts) | Conductive material content (B) (wt%) | Content ratio (A/B) |
|---|---|---|---|
| Example 1 | 0.6 | 1.5 | 0.4 |
| Example 2 | 0.84 | 1.5 | 0.56 |
| Example 3 | 0.36 | 1.5 | 0.24 |
| Example 4 | 0.12 | 1.5 | 0.08 |
| Example 5 | 1.2 | 1.5 | 0.8 |
| Example 6 | 2.25 | 1.5 | 1.5 |
| Example 7 | 2.8 | 1.5 | 1.87 |
| Example 8 | 0.125 | 0.5 | 0.25 |
| Example 9 | 0.265 | 0.5 | 0.53 |
| Example 10 | 0.045 | 0.5 | 0.09 |
| Example 11 | 0.53 | 0.5 | 1.06 |
| Example 12 | 0.75 | 0.5 | 1.5 |
| Example 13 | 0.935 | 0.5 | 1.87 |
| Example 14 | 0.65 | 2.5 | 0.26 |
| Example 15 | 0.175 | 2.5 | 0.07 |
| Example 16 | 1.325 | 2.5 | 0.53 |
| Example 17 | 2.0 | 2.5 | 0.8 |
| Example 18 | 3.75 | 2.5 | 1.5 |
| Example 19 | 4.75 | 2.5 | 1.90 |
| Example 20 | 0.16 | 0.3 | 0.53 |
| Example 21 | 1.52 | 2.8 | 0.54 |
| Example 22 | 0.6 | 1.5 | 0.4 |
| Comparative Example 1 | 0 | 1.5 | 0 |
| Comparative Example 2 | 0 | 0.5 | 0 |
| Comparative Example 3 | 0 | 2.5 | 0 |
| Comparative Example 4 | 3.3 | 1.5 | 2.2 |
| Comparative Example 5 | 5.45 | 2.5 | 2.18 |
| Comparative Example 6 | 1.05 | 0.5 | 2.10 |

**Experimental Example 2**

**(1) Measurement of cross-sectional image of cathode active material layer**

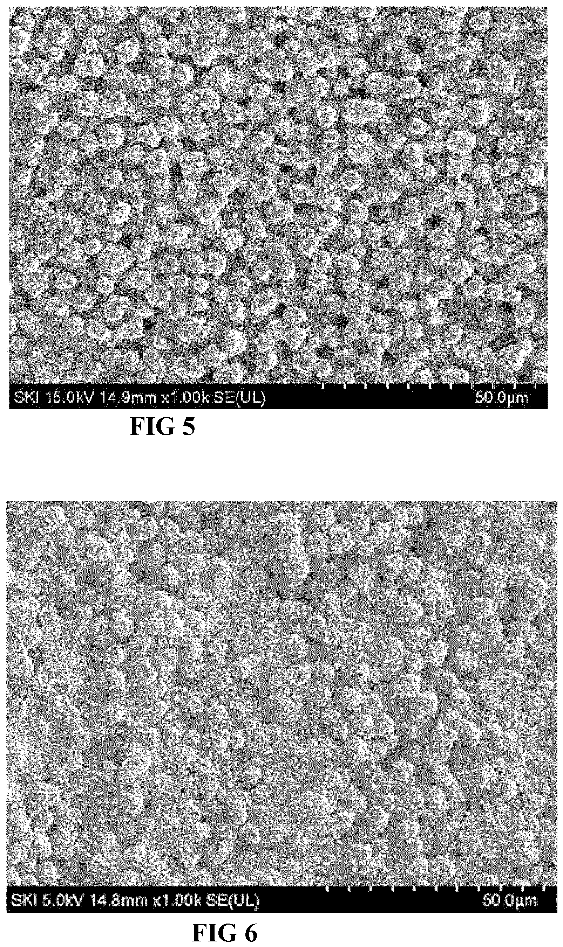

FIGS. 5 and 6 are scanning electron microscope (SEM) images of cathode active material layers prepared in Example 1 and Comparative Example 1, respectively.

Referring to FIG. 5, a web-like coating was formed on the surface of the core particle, and the cathode active material and the solid electrolyte were uniformly distributed within the cathode active material layer.

Referring to FIG. 6, since no coating was formed on the core particle, the dispersibility of the solid electrolyte was reduced, and the solid electrolyte was observed in an agglomerated state in localized regions of the cathode active material layer.

**(2) Evaluation of initial efficiency**

The manufactured compression cell was charged (CC-CV 0.1C-2C, 4.27V cut-off with cut-off currents of 0.314 mA at 0.1 C, 0.627 mA at 0.2 C, 1.568 mA at 0.5 C, and 6.272 mA at 2.0 C) and discharged (CC 0.1C-2C, 2.5V cut-off) at 30°C to measure the initial charge and discharge capacities. The initial efficiency was evaluated as the percentage of the initial discharge capacity (A2) to the initial charge capacity (A1), as shown in Equation 1 below.

[Equation 1]

$$\text{Initial efficiency (\%)} = A2/A1 \times 100$$

The evaluation results are shown in Table 2 below.

**(3) Evaluation of high-rate characteristics**

The manufactured compression cell was charged and discharged at 0.1C for the first 3 cycles at a temperature of 30°C under cut-off conditions of charging at 4.27V and discharging at 2.5V, and the discharge capacity (B1) in the first cycle was measured. Thereafter, 3 cycles of charge and discharge were performed at a rate of 0.2C, and 3 additional cycles of charge and discharge were performed at a rate of 0.5C. Subsequently, the cell was charged and discharged at 2.0C, and the discharge capacity (B2) was measured.

The high-rate characteristics were evaluated as the percentage of the discharge capacity (B2) at high rate (2.0C) relative to the discharge capacity (B1) at low rate (0.1C), as shown in Equation 2 below.

[Equation 2]

$$\text{High-rate characteristic (\%)} = B2/B1 \times 100$$

The evaluation results are shown in Table 2 below.

[TABLE 2]

|  | Initial efficiency characteristics (%) | High-rate characteristics (%) |
|---|---|---|
| Example 1 | 90 | 85 |
| Example 2 | 91 | 84 |
| Example 3 | 90 | 87 |
| Example 4 | 83 | 73 |
| Example 5 | 87 | 74 |
| Example 6 | 87 | 70 |
| Example 7 | 87 | 68 |
| Example 8 | 87 | 83 |
| Example 9 | 88 | 84 |
| Example 10 | 72 | 68 |
| Example 11 | 77 | 65 |
| Example 12 | 78 | 63 |
| Example 13 | 79 | 61 |
| Example 14 | 91 | 85 |
| Example 15 | 88 | 71 |
| Example 16 | 88 | 68 |

(continued)

| | Initial efficiency characteristics (%) | High-rate characteristics (%) |
|---|---|---|
| Example 17 | 87 | 65 |
| Example 18 | 78 | 64 |
| Example 19 | 75 | 62 |
| Example 20 | 67 | 64 |
| Example 21 | 85 | 61 |
| Example 22 | 85 | 75 |
| Comparative Example 1 | 63 | 48 |
| Comparative Example 2 | 68 | 55 |
| Comparative Example 3 | 50 | 29 |
| Comparative Example 4 | 50 | 37 |
| Comparative Example 5 | 54 | 41 |
| Comparative Example 6 | 48 | 27 |
| Comparative Example 7 | 65 | 55 |
| Comparative Example 8 | 65 | 53 |

Referring to Tables 1 and 2, in the lithium secondary batteries of the examples, the content ratios of the conductive particles and fibrous conductive material were within the target range, so that both the initial efficiency characteristics and the high-rate characteristics were optimized. In Comparative Examples 1 to 3, since the cathode active material did not include a conductive coating, the initial efficiency and the high-rate characteristics were significantly degraded.

In Comparative Examples 4 to 6, in which the ratio of the content of the conductive particles to the content of the fibrous conductive material was greater than 2.0, the initial efficiency and high-rate characteristics were degraded.

In Comparative Examples 7 and 8, a dot-shaped conductive material was used as the conductive material of the cathode active material layer instead of the fibrous conductive material, and the initial efficiency and high-rate characteristics were degraded compared to Example 1.

The invention is also defined by the following aspects:

Aspect 1. An electrode for a lithium secondary battery comprising an electrode active material layer comprising:

an electrode active material comprising a core particle, and a coating that covers at least a portion of a surface of the core particle and comprises conductive particles; a solid electrolyte;

and a fibrous conductive material, wherein a ratio of the content of the conductive particles to the content of the fibrous conductive material is 0.01 to 2.0 based on the total weight of the electrode active material layer.

Aspect 2. The electrode for a lithium secondary battery according to aspect 1, wherein the conductive particles comprise a dot-shaped conductive material.

Aspect 3. The electrode for a lithium secondary battery according to aspect 1 or 2, wherein the content of the fibrous conductive material is 0.5% by weight to 2.5% by weight based on the total weight of the electrode active material layer.

Aspect 4. The electrode for a lithium secondary battery according to any one of aspect 1 to 3, wherein the content of the coating on the core particle is 0.1 parts by weight to 3 parts by weight based on 100 parts by weight of the core particles.

Aspect 5. The electrode for a lithium secondary battery according to any one of aspect 1 to 4, wherein the fibrous conductive material has a specific surface area of $0.1 \text{ m}^2/\text{g}$ to $3,000 \text{ m}^2/\text{g}$, wherein the fibrous conductive material has a diameter of 0.4 nm to 400 nm.

Aspect 6. The electrode for a lithium secondary battery according to any one of aspect 1 to 5, wherein the coating partially covers the surface of the core particle.

Aspect 7. The electrode for a lithium secondary battery according to any one of aspect 1 to 6, wherein the coating comprises a third pattern having a web-like shape, wherein the coating further comprises a pattern having an island-like shape or a pattern having a chain-like shape.

Aspect 8. The electrode for a lithium secondary battery according to any one of aspect 1 to 7, wherein the core particle has a median particle diameter ($D_{50}$) of 1 $\mu$m to 20 $\mu$m.

Aspect 9. The electrode for a lithium secondary battery according to any one of aspect 1 to 8, wherein the electrode active material layer further comprises a binder.

Aspect 10. A method for manufacturing an electrode for a lithium secondary battery comprising: forming a coating comprising conductive particles on a core particle to prepare an electrode active material;

mixing the electrode active material with a solid electrolyte;

mixing the mixture of the electrode active material and the solid electrolyte with a fibrous conductive material to form an electrode slurry; and

coating the electrode slurry on an electrode current collector to form a secondary electrode active material layer on top of the electrode current collector,

wherein a ratio of the content of the conductive particles of the primary electrode active material to the content of the fibrous conductive material is 0.01 to 2.0 based on the total weight of the electrode slurry.

Aspect 11. The method for manufacturing an electrode for a lithium secondary battery according to aspect 10, wherein the conductive particles comprise a dot-shaped conductive material.

Aspect 12. The method for manufacturing an electrode for a lithium secondary battery according to aspect 10 or 11, wherein the coating is partially formed on the core particle.

Aspect 13. The method for manufacturing an electrode for a lithium secondary battery according to any one of aspect 10 to 12, wherein the coating comprises a web-like pattern formed by conductive particles continuously connected to one another.

Aspect 14. The method for manufacturing an electrode for a lithium secondary battery according to aspect 13, wherein, in the step of mixing the electrode active material with a solid electrolyte, the solid electrolyte becomes entangled in the web-like pattern formed by the conductive particles and comes into contact with the surface of the core particle.

Aspect 15. The method for manufacturing an electrode for a lithium secondary battery according to any one of aspect 10 to 14, further comprising adding a binder to the electrode slurry.

**Claims**

1. An electrode for a lithium secondary battery comprising an electrode active material layer comprising:

   an electrode active material comprising a core particle, and a coating that covers at least a portion of a surface of the core particle and comprises conductive particles;

   a solid electrolyte; and

   a fibrous conductive material,

   wherein a ratio of the content of the conductive particles to the content of the fibrous conductive material is 0.01 to 2.0 based on the total weight of the electrode active material layer.

2. The electrode for a lithium secondary battery according to claim 1, wherein the conductive particles comprise a dot-shaped conductive material.

3. The electrode for a lithium secondary battery according to claim 1 or 2, wherein the content of the fibrous conductive material is 0.5% by weight to 2.5% by weight based on the total weight of the electrode active material layer.

4. The electrode for a lithium secondary battery according to any one of claims 1 to 3, wherein the content of the coating on the core particle is 0.1 parts by weight to 3 parts by weight based on 100 parts by weight of the core particles.

5. The electrode for a lithium secondary battery according to any one of claims 1 to 4, wherein the fibrous conductive material has a specific surface area of 0.1 $m^2$/g to 3,000 $m^2$/g, wherein the fibrous conductive material has a diameter of 0.4 nm to 400 nm.

6. The electrode for a lithium secondary battery according to any one of claims 1 to 5, wherein the coating partially covers the surface of the core particle.

7. The electrode for a lithium secondary battery according to any one of claims 1 to 6, wherein the coating comprises a third pattern having a web-like shape, wherein the coating further comprises a pattern having an island-like shape or a pattern having a chain-like shape.

8. The electrode for a lithium secondary battery according to any one of claims 1 to 7, wherein the core particle has a median particle diameter ($D_{50}$) of 1 $\mu$m to 20 $\mu$m.

9. The electrode for a lithium secondary battery according to any one of claims 1 to 8, wherein the electrode active material layer further comprises a binder.

10. A method for manufacturing an electrode for a lithium secondary battery comprising:

forming a coating comprising conductive particles on a core particle to prepare an electrode active material;
mixing the electrode active material with a solid electrolyte;
mixing the mixture of the electrode active material and the solid electrolyte with a fibrous conductive material to form an electrode slurry; and
coating the electrode slurry on an electrode current collector to form a secondary electrode active material layer on top of the electrode current collector,
wherein a ratio of the content of the conductive particles of the primary electrode active material to the content of the fibrous conductive material is 0.01 to 2.0 based on the total weight of the electrode slurry.

11. The method for manufacturing an electrode for a lithium secondary battery according to claim 10, wherein the conductive particles comprise a dot-shaped conductive material.

12. The method for manufacturing an electrode for a lithium secondary battery according to claim 10 or 11, wherein the coating is partially formed on the core particle.

13. The method for manufacturing an electrode for a lithium secondary battery according to any one of claims 10 to 12, wherein the coating comprises a web-like pattern formed by conductive particles continuously connected to one another.

14. The method for manufacturing an electrode for a lithium secondary battery according to claim 13, wherein, in the step of mixing the electrode active material with a solid electrolyte, the solid electrolyte becomes entangled in the web-like pattern formed by the conductive particles and comes into contact with the surface of the core particle.

15. The method for manufacturing an electrode for a lithium secondary battery according to any one of claims 10 to 14, further comprising adding a binder to the electrode slurry.

<u>50</u>

**FIG 1**

| Coat conductive particles on core particle | S10 |

| Mix electrode active material with solid electrolyte | S20 |

| Mix mixture with fibrous conductive material to prepare electrode slurry | S30 |

| Coat electrode slurry | S40 |

**FIG 2**

**FIG 3**

**FIG 4**

SKI 15.0kV 14.9mm x1.00k SE(UL)    50.0μm

**FIG 5**

SKI 5.0kV 14.8mm x1.00k SE(UL)    50.0μm

**FIG 6**

**EP 4 700 855 A1**

# EUROPEAN SEARCH REPORT

**Application Number**

EP 25 19 6732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/212233 A1 (ITO SEITARO [JP] ET AL) 26 July 2018 (2018-07-26) | 1-4, 7-11, 13-15 | INV.<br>H01M4/1391<br>H01M4/36 |
| A | * paragraphs [0065], [0069], [0077], [0083], [0084], [0109] - [0112], [0128]; figures 1,2; example 1 * | 5,6,12 | H01M4/48<br>H01M4/62<br>H01M10/0525<br>H01M4/02 |
| X | ----- US 10 263 279 B2 (SILA NANOTECHNOLOGIES INC [US]) 16 April 2019 (2019-04-16) | 1 | |
| A | * column 5, line 25 - line 50 *<br>* column 6, line 55 - line 62; figures 1,4 * | 2-15 | |
| A | ----- CN 113 728 463 A (LG CHEMICAL LTD) 30 November 2021 (2021-11-30)<br>* paragraphs [0010], [0066] - [0069] *<br>----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 17 December 2025 | Mugnaini, Veronica |

EPO FORM 1503 03.82 (P04C01)

## ANNEX TO THE EUROPEAN SEARCH REPORT
## ON EUROPEAN PATENT APPLICATION NO.

EP 25 19 6732

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2025

| Patent document cited in search report | | | Publication date | Patent family member(s) | | | Publication date |
|---|---|---|---|---|---|---|---|
| US 2018212233 | A1 | | 26-07-2018 | NONE | | | |
| US 10263279 | B2 | | 16-04-2019 | US | 2014170503 | A1 | 19-06-2014 |
| | | | | US | 2019237802 | A1 | 01-08-2019 |
| | | | | US | 2022263128 | A1 | 18-08-2022 |
| CN 113728463 | A | | 30-11-2021 | CN | 113728463 | A | 30-11-2021 |
| | | | | EP | 3916852 | A1 | 01-12-2021 |
| | | | | JP | 7265023 | B2 | 25-04-2023 |
| | | | | JP | 2022521178 | A | 06-04-2022 |
| | | | | KR | 20200129381 | A | 18-11-2020 |
| | | | | US | 2022190381 | A1 | 16-06-2022 |
| | | | | WO | 2020226322 | A1 | 12-11-2020 |

EPO FORM P0459

For more details about this annex : see Official Journal of the European Patent Office, No. 12/82